# EUROPEAN PATENT SPECIFICATION

(11) **EP 1 863 256 B1**
(45) Date of publication and mention of the grant of the patent: **09.03.2011**
(21) Application number: 06805007.9
(22) Date of filing: 20.10.2006
(51) Int. Cl.: H04L 29/06

(54) **A MEDIA STREAM BRIDGING DEVICE AND A MEDIA SERVICE SYSTEM**
MEDIENSTROMÜBERBRÜCKUNGSVORRICHTUNG UND MEDIENSERVICESYSTEM
DISPOSITIF DE PONTAGE DE FLUX MULTIMÉDIA ET SYSTÈME DE SERVICES MULTIMÉDIA

(30) Priority: 28.02.2006 CN 200610034088
(43) Date of publication of application: 05.12.2007
(73) Proprietor: Huawei Technologies Co., Ltd., Shenzhen, Guangdong Province 518129 (CN)
(72) Inventor: WU, Yanyu c/o Huawei Technologies Co., Ltd., Guangdong Province 518129 (CN); SU, Yu c/o Huawei Technologies Co., Ltd., Guangdong Province 518129 (CN)
(74) Representative: Sachseder, Matthias
(86) International application number: PCT/CN2006/002797
(87) International publication number: WO 2007/098653

(56) References cited:
- CN-A- 1 402 492
- CN-A- 1 468 001
- US-A1- 2003 163 520
- HARDWICK J: "Session Border Controllers - Enabling the VoIP Revolution" INTERNET CITATION, [Online] XP002362943 Retrieved from the Internet: URL:http://www.dataconnection.com/network/ download/whitepapers/sessionbordercontroll er.pdf> [retrieved on 2006-01-11]
- CAMARILLO J HAUTAKORPI ERICSSON R PENFIELD ACME PACKET A HAWRYLYSHEN JASOMI NETWORKS G: "Functionality of Existing Session Border Controller (SBC); draft-camarillo-sipping-sbc-funcs-00.txt" IETF STANDARD-WORKING-DRAFT, INTERNET ENGINEERING TASK FORCE, IETF, CH, 14 February 2005 (2005-02-14), XP015011488 ISSN: 0000-0004
- MAHY SIP EDGE LLC B CAMPBELL R SPARKS ESTACADO SYSTEMS J ROSENBERG CISCO SYSTEMS D PETRIE SIP EZ A JOHNSTON MCI R: "A Call Control and Multi-party usage framework for the Session Initiation Protocol (SIP); draft-ietf-sipping-cc-framework-05.txt" IETF STANDARD-WORKING-DRAFT, INTERNET ENGINEERING TASK FORCE, IETF, CH, vol. sipping, no. 5, 1 October 2005 (2005-10-01), XP015042704 ISSN: 0000-0004

## Description

### Field of the Invention

The present invention relates to media service, and in particular, to a media flow bridging device and a media service system that can realize media flow multi-negotiation.

### Background of the Invention

In comparison with a narrowband network, a broadband network can provide more abundant media resources to users. Although the network has entered into an era of broadband, the application of automatic and manual services of Call Centers and Intelligent Networks that largely exist in a narrowband network will not be changed greatly in a short period because people's habit in using networks is hard to change. Some widely accepted services in a narrowband network will be used in a broadband network inevitably. Most typically, automatic services or manual services in Call Centers or Intelligent Networks are still indispensable in broadband networks.

In a narrowband network, service applications such as Automatic-To-Manual, Manual-To-Automatic and Voice-To-Fax, etc., may often appear in the services of a Call Center. Such service applications are usually realized by modifying lap joints of narrowband timeslot in a switching module of an exchanger or system so as to lap-joint a user call to different resources (voice, fax, manual operator and so on). Thus, continuous switches between services may be accomplished. Such operations are all performed in the interior of a system, and they are completely transparent to users or user terminals.

However, in a broadband network, with call being separated from bearing, a call control device will no longer be provided with the function of bearing, and a bearing network will evolve into IP networks. As a result, the point-to-point exchange of media flow is realized between a user terminal and a system resource (voice, image, fax, manual operator and so on) through RTP (Real-time Transport Protocol) directly, which will bring difficulties for some of the traditional services. Specifically, it is difficult for the operator to perform quality control function (inserting, monitoring, recording, etc.), because a user terminal and a manual operator interact in an end-to-end mode with the RTP media flows therebetween not going through a call control device in the system. On the other hand, in a broadband network, there is some restriction on the support of multiple media negotiation: an H.323 terminal does not support a second media negotiation; an SIP (Session Initiation Protocol) terminal supports a second negotiation, but it is not a mandatory requirement; and even if a terminal supports a second negotiation, it will depend on whether its opposite terminal supports a second media negotiation if the opposite end device accesses a call in MGC+MGW mode, and even if the opposite end device supports a second negotiation, there may be a larger time delay.
XP002362943 is directed to a session border controller enabling VoIP signling and media to be received from and directed to a device behind a firewall/NAT at the border of an adjacent network. XP015011488 relates to functionality of existing SBC, and XP 015042704 relates to a SIP call controller framework.

In the prior art, after a user, such as a 3G terminal, an H.323 terminal or an SIP terminal etc., accesses a system, it may be accessed to different resources according to a service flow. Usually, it is first accessed to a voice resource, which provides information such as service use directions; and according to different user requirements, it is possible that the user requires fax service, operator service, meeting access service, or other services. This will inevitably require that the media flow of the terminal is switched from the voice resource device to the fax, the manual operator or the conference place. However, if the terminal or the exterior network device does not support a second media negotiation and modification, this function will not be realized. Moreover, an H.323 terminal does not support a second media negotiation; a SIP terminal protocol supports a second media negotiation, but it is not a mandatory requirement. If a terminal supports a second negotiation, it will depend on whether its opposite end device supports a second media negotiation if the opposite end device accesses a call in MGC+MGW mode. Even if the opposite end device supports a second negotiation, there may be greater time delay. On the other hand, after a user accessed to a manual operator, the media flow is exchanged between the user terminal and the manual operator through RTP directly, which will bring some difficulties for the system quality control staff in monitoring or recording the session.

Therefore, with bearing networks evolving into IP networks, difficulties will arise when some widely accepted services (typically, such as automatic services or manual services in Call Centers or Intelligent Networks) in the traditional narrowband networks are shifted into IP networks. Service switch among various resources (such as voice, video, image, fax, manual operator, etc.) can not be realized because broadband networks restrict support of a second media negotiation.

### Summary of the Invention

The invention provides a media flow bridging device according to claim 1 and a media service system according to claim 6, which supports functions such as resource switch, manual operator quality control, etc., which are needed by the system to carry out various services.

The invention is implemented by the following technical solutions.

A media flow bridging device is provided. The media flow bridging device includes: a control module and a real-time transparent protocol (RTP) module connected with the control module, wherein the control module is capable of receiving a control message from a control device outside the media flow bridging device, and controlling the RTP module according to the control message and; the RTP module is capable of processing RTP protocols and of transferring a media flow between a user terminal and media resources under control of the control module.

According to an embodiment of the invention, the RTP module includes: an RTP source module connected with the control module, and an RTP destination module connected with the control module and the RTP source module, wherein the RTP source module is capable of transferring a media flow to a user terminal or transferring a media flow from the user terminal; and the RTP destination module is capable of transferring a media flow to a media resource device or transferring a media flow from the media resource device, wherein the media resource device provides media resources.

The device further includes: at least one of a code conversion module and an audio mixing module, wherein the code conversion module is capable of converting code format of a media flow; and the audio mixing module is capable of performing media mixing on media flows of all conference parties during a multiparty session.

At least one of the code conversion module and the audio mixing module is arranged between the RTP source module and the RTP destination modules, and the at least one of the code conversion module and the audio mixing module is capable of connecting the RTP source module with at least two RTP destination modules.

A system for media service including the media flow bridging device is provided, which further includes a control device, capable of processing signaling and controlling a service flow; and a media resource device connected with the control device, capable of providing media resources; the media flow bridging device is connected with the control device and the media resource device, wherein the media resource device transfers a media flow to or from a device exterior to the media service system via the media bridging device.

A method of transferring a media flow is provided using the media flow bridging device, which includes: receiving by the control module, a control message from a control device outside the media flow bridging device, controlling the RTP module by the control module according to the control message processing by the RTP module, protocols and transferring a media flow between a user terminal and media resources under the control of the control module.

It can be seen from the above technical solutions provided by embodiments of the present invention that the technical solutions of the present invention can solve the problems in such as operator quality control, automatic-manual service switch and automatic service switch etc in a broadband network which arise when a media flow is exchanged between a user terminal and a resource device (voice, image, fax and manual operator, etc.) point-to-point through RTP directly in the broadband network.

### Brief Description of the Drawings

Figure 1 is a structural diagram of a media service system in accordance with an embodiment of the present invention;

Figure 2 is a structural diagram of a media flow bridging device in accordance with an embodiment of the present invention;

Figure 3 is a structural diagram of an RTP module of a media flow bridging device in accordance with an embodiment of the present invention;

Figure 4 is a structural diagram of a media flow bridging device in accordance with an embodiment of the present invention;

Figure 5 is a structural diagram of an RTP module of a media flow bridging device in accordance with another embodiment of the present invention;

Figure 6 is a structural diagram of a media flow bridging device in accordance with an embodiment of the present invention; and

Figure 7 is a structural diagram of a media flow bridging device in accordance with another embodiment of the present invention.

### Detailed Description of the Embodiments

To solve the problem that manual service quality control and automatic flow switch are restricted in a broadband network, according to an embodiment of the present invention, a media flow bridging device is added in a call center of a broadband network or a resource platform of an intelligent network (including other similar systems) or provided independently in order to achieve broadband media flow access. Functions SUCK as media switch, media flow copying and distributing, can be realized through connecting the media flow bridging device to various media resource devices in the system, and functions such as resource switch, manual operator quality control, which are needed by the system to carry out various services, are therefore being supported.

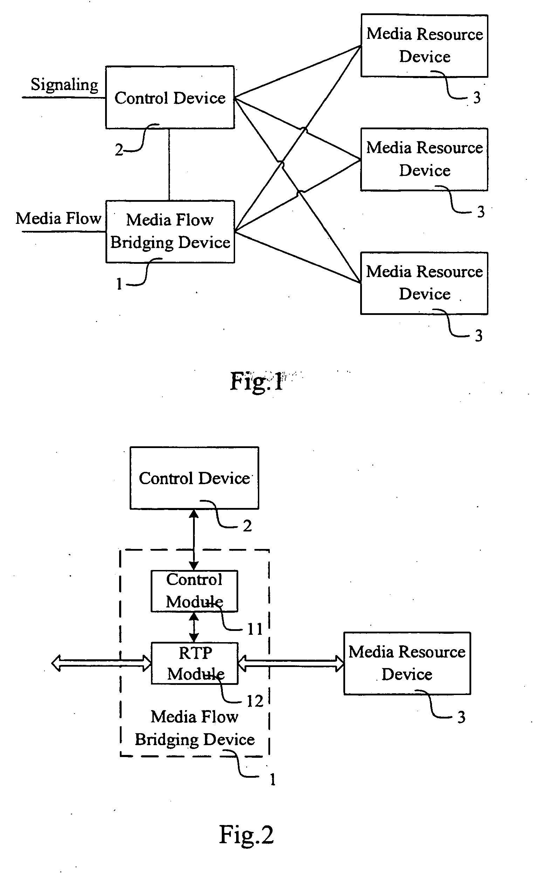

Figure 1 shows a structural diagram of a media service system according to an embodiment of the invention. The system includes: a media flow bridging device 1, a control device 2 and a plurality of media resource devices 3. The control device 2 is connected with the media flow bridging device 1 and the media resource devices 3, for processing signaling and controlling service flows. The media resource device 3 is used for providing media resources and is connected with the media flow bridging device 1, for transferring a media flow to or from a device exterior to the media service system via the media flow bridging device 1. The media resource device 3 may be: a voice device (playing, recording and number receiving), a fax device (transceiving a fax), a multimedia device (multimedia playing and recording), a manual agent, or various combinations thereof. The control device may be: a Service Control Point (SCP) of an Intelligent Network, a CTI (Computer Telephony Integration) Server of a Call Center, a combination thereof, an MRFC (Media Resource Function Controller) of an IMS (Information Management System), other devices with similar functions, and so on.

Figure 2 shows a structural diagram of a media flow bridging device according to an embodiment of the invention. The device includes a control module 11 and an RTP module 12. The control module 11 is used for receiving control messages, performing media negotiation and controlling service flows. The RTP module 12 is connected with the control module 11, for processing RTP protocols and transferring media flows according to control information of the control module. In this figure and the following figures, "↔ " means that information transferred is a control command, and "⇔" means that information transferred is a media flow.

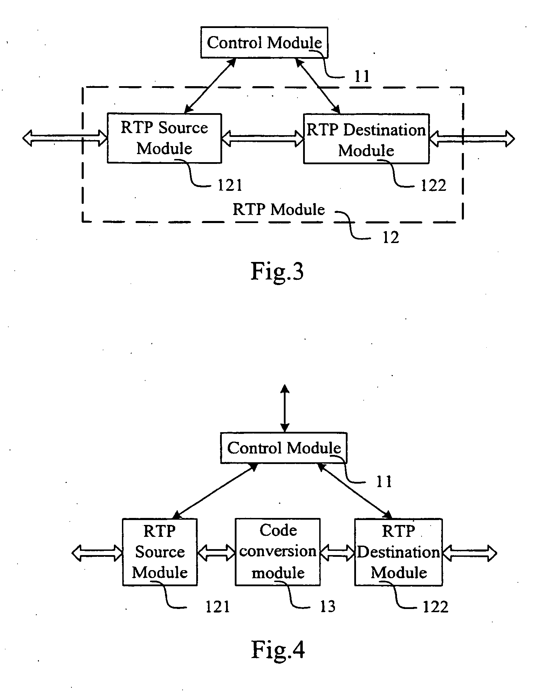

The RTP module may include a plurality of submodules, for communicating with a user terminal and a media resource device respectively. Figure 3 is a structural diagram of an RTP module according to one embodiment of the invention, which includes a RTP source module 121 and an RTP destination module 122 connected with each other, and both of the modules are connected with a control module 11. The RTP source module 121 is used for transferring a media flow to or from a user terminal. The RTP destination module 122 is used for transferring a media flow to or from a media resource device that provides media resources.

When the user terminal and the media resource device employ different media code formats, the code format of the media flow needs to be converted, and the media flow will then be forwarded after the conversion is completed. Figure 4 is a structural diagram of a media flow bridging device according to an embodiment of the invention, which includes a control module 11, an RTP source module 121, a code conversion module 13 and an RTP destination module 122. The control module 11 is connected with all of the other modules, for controlling each of them to accomplish functions required by the system. The RTP source module 121 is connected with the RTP destination module 122 via the code conversion module 13. The code conversion module 13 is used for converting the code format of a media flow in accordance with media formats supported by the user terminal and the media resource device.

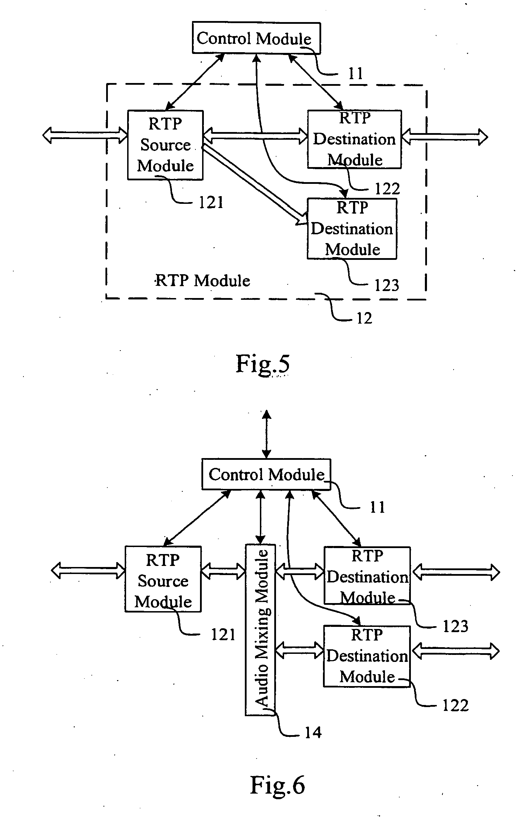

When required to communicate with a plurality of media resource devices, the RTP module may include two or more RTP destination modules. Figure 5 is a structural diagram of an RTP module according to another embodiment of the invention. The RTP module 12 includes an RTP source module 121 and RTP destination modules 122, 123. The RTP source module 121 is used for transferring a media flow to or from a user terminal. The RTP destination modules 122 and 123 are used for transferring media flows to or from a media resource device. A media resource device connected to the RTP destination module 122 may perform two-way media interaction with a user terminal connected to the RTP source module 121. However, the media resource device connected to the RTP destination module 123 can only receive a media flow from a user terminal, but cannot send a media flow to the user terminal. In such a situation, the media flow bridging device may copy the media flow of the source end (the user side) and send them to a third party endpoint, which can be applicable for monitoring or third party recording. When the media format supported by the user terminal is different from that supported by the media resource device, a code conversion module may also be added.

To realize multiparty services and make a user terminal able to perform a two-way media flow transfer with a plurality of media resource devices, an audio mixing device may be added. Figure 6 shows a structural diagram of a media flow bridging device according to one embodiment of the invention. The media flow bridging device includes a control module 11, an audio mixing module 14, an RTP source module 121 and RTP destination modules 122, 123. The control module 11 is connected with the audio mixing module 14, the RTP source module 121 and the RTP destination modules 122, 123, for controlling each of the modules to accomplish functions required by the system. The RTP source module 121 is connected with the RTP destination modules 122 and 123 via the audio mixing module 14 which mixes media flows from various parties, and therefore the multiparty service can be achieved, in which all the media resource devices connected to the RTP destination modules 122 and 123 may perform the two-way media flow transfer with the user terminals connected to the RTP source module 121.

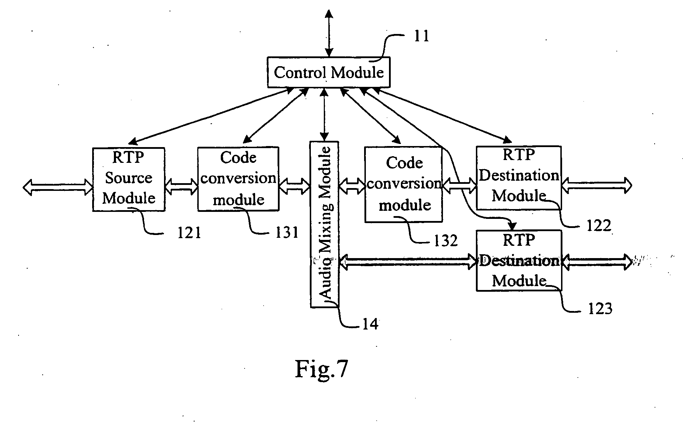

In a multiparty service, a code conversion module may also be added because code formats supported by different conference parties may be different, and the audio mixing module performs audio-mixing in one code format for the same meeting site, which requires that different formats be firstly converted into a common intermediate format for audio-mixing. Figure 7 shows a structural diagram of a media flow bridging device according to another embodiment of the invention. In this embodiment, the code formats supported by the user terminal and the media resource device connected with the RTP destination module 122 are different from that supported by the audio mixing module 14, while the media format supported by the media resource device connected with the RTP destination module 123 is the same with that supported by the audio mixing module 14. Therefore, the RTP source module 121 is connected with the audio mixing module 14 via a code conversion module 131. The audio-mixing module 14 is connected with the RTP destination module 122 via a code conversion module 132. The audio mixing module 14 is connected with the RTP destination module 123 directly. The control module 11 is connected with each of the other modules, for controlling each of the modules to accomplish system functions.

In addition, when there is a need to record a media flow, a recording module may also be added. The recording module is connected with the control module, for recording media flow data, e.g. audio, video or graphic data, according to control information of the control module, and the recording module is also connected with corresponding modules according to media code format requirements and specific recording needs. For example, when the media resource connected with the RTP destination module is a manual operator, if quality control needs to be performed on the manual operator, the recording module may be connected with the RTP destination module and record the audio media flow; and in a multiparty service, if there is a need to record the media flow of the whole meeting site, the recording module may be connected with the audio mixing module and record the audio-video media flow of the meeting site as needed.

The media flow bridging device achieves media flow bridging function between a user terminal and a media resource device, i.e. all media flows of all calls accessing the system are directly accessed to the media flow bridging device, rather than being accessed to directly to the media resource device. The media flow bridging device then establishes a media flow connection to a corresponding resource device. When the service needs switch among different resources, only the media flow bridging device needs to be controlled so that the media flow bridging device is connected to different resources, thus the user terminal may be switched to different resource device. When the format of the media flow provided by the resource to be switched to is not the media flow format supported by the user terminal, the media flow bridging device may accomplish the corresponding code format conversion. The above operations are completely transparent to the user terminal.

When quality control needs to be performed on a manual operator after a user terminal is connected to the manual operator, the media flow bridging device copies the media flow between the user terminal and the manual operator and delivers it to the quality control staff or a recording system, so that functions such as inserting, monitoring, recording or even three-party calling can be accomplished.

In the invention, the existing services such as automatic service process, manual operator may be realized in a broadband (NGN, 3G, VOIP) network, and the invention solves problems in such as operator quality control, automatic manual service switch, automatic service switch that arise when media flows are exchanged between a user terminal and a resource device (voice, image, fax, manual operator, etc.) point-to-point through RTP directly in a broadband network.

Additional advantages and modifications will readily occur to those skilled in the art. Therefore, the invention in its broader aspects is not limited to the specific details and representative embodiments shown and described herein. Accordingly, various modifications and variations may be made within the scope of the invention as defined by the appended claims and their equivalents.

## Claims

1. A media flow bridging device (1), comprising:
a control module (11), for receiving a control message, performing media negotiation and
controlling a service process; and
an real-time transparent protocol (RTP) module (12), connected with the control module (11), for processing RTP protocols and transfer a media flow according to control information of the control module (11); and **characterized in that**
the RTP module (12) further comprises:
an RTP source module (121) connected with the control module (11), for transferring a media flow to a user terminal ; and
two or more RTP destination modules (122, 123), connected with the control module (11) and the RTP source module (121), for transferring a respective media flow to a media resource device (3) or transferring a media flow from the media resource device (3),
wherein the media resource device (3) provides media resources; wherein the bridging device further comprises an audio mixing module (14), for performing audio mixing on media flows of all conference parties during a multiparty service wherein the control module (11) is connected with the audio mixing module (14), the RTP source module (121) and the RTP destination modules (122, 123), for controlling each of the modules.

2. The media flow bridging device (1) according to claim 1, further comprising:
a code conversion module (13), for converting code format of a media flow; and/or
an audio mixing module (14), for performing audio mixing on media flows of all conference parties during a multiparty service.

3. The media flow bridging device (1) according to claim 2, wherein: the code conversion module (13) and/or the audio mixing module (14) are/is arranged between the RTP source module (121) and the RTP destination modules (122), for connecting the RTP source module (121) with at least two RTP destination modules (122).

4. The media flow bridging device (1) according to claim 2, further comprising:
a recording module, connected with the control module (11), for recording media data.

5. The media flow bridging device (1) according to claim 2, further comprising:
a recording module, connected with the control module (11) and the audio mixing module (14), for recording media data.

6. A system for media service containing the media flow bridging device (1) according to any one of claims 1 to 5, comprising:
a control device (2) for processing signaling and controlling a service process;
a media resource device (3), connected with the control device (2), for providing media resources; and
wherein the media flow bridging device (1) is connected with the control device (2) and
the media resource device (3), and the media resource device (3) transfers a media flow to or from a device exterior to the media service system via the media flow bridging device (1).

7. The system according to claim 6, wherein the media resource device (3) comprises:
a voice device, and/or a fax device, and/or a multimedia device, and/or a manual agent.

8. The system according to claim 6, wherein the control device (2) comprises:
an SCP of an Intelligent Network, or a CTI Server of a Call Center, or a combination thereof, or an MRFC of an IMS.

## Patentansprüche

1. Medienfluss-Überbrückungseinrichtung (1), umfassend:
ein Steuermodul (11), zum Empfangen einer Steuernachricht, Ausführen von Medienaushandlung und Steuern eines Dienstprozesses; und
ein mit dem Steuermodul (11) verbundenes Modul (12) des Real-Time Transparent Protocol (RTP) zum Verarbeiten von RTP-Protokollen und Übermitteln eines Medienflusses gemäß Steuerinformationen des Steuermoduls (11); und **dadurch gekennzeichnet, dass** das RTP-Modul (12) ferner Folgendes umfasst:
ein mit dem Steuermodul (11) verbundenes RTP-Quellenmodul (121) zum Übermitteln eines Medienflusses zu einem Benutzerendgerät, und
zwei oder mehr mit dem Steuermodul (11) und dem RTP-Quellenmodul (121) verbundene RTP-Zielmodule (122, 123) zum Übermitteln eines jeweiligen Medienflusses zu einer Medienressourceneinrichtung (3) oder Übermitteln eines Medienflusses von der Medienressourceneinrichtung (3), wobei die Medienressourceneinrichtung (3) Medienressourcen bereitstellt; wobei die Überbrückungseinrichtung ferner ein Audiomischmodul (14) zum Durchführen von Audiomischung an Medienflüssen aller Konferenzteilnehmer während eines Mehrteilnehmerdienstes umfasst, wobei das Steuermodul (11) mit dem Audiomischmodul (14), dem RTP-Quellenmodul (121) und den RTP-Zielmodulen (122, 123) verbunden ist, um jedes der Module zu steuern.

2. Medienfluss-Überbrückungseinrichtung (1) nach Anspruch 1, ferner umfassend:
ein Codeumsetzungsmodul (13) zum Umsetzen des Codeformats eines Medienflusses; und/oder
ein Audiomischmodul (14) zum Durchführen von Audiomischung an Medienflüssen aller Konferenzteilnehmer während eines Mehrteilnehmerdienstes.

3. Medienfluss-Überbrückungseinrichtung (1) nach Anspruch 2, wobei das Codeumsetzungsmodul (13) und/oder das Audiomischmodul (14) zwischen dem RTP-Quellenmodul (121) und den RTP-Zielmodulen (122) angeordnet sind bzw. ist, um das RTP-Quellenmodul (121) mit mindestens zwei RTP-Zielmodulen (122) zu verbinden.

4. Medienfluss-Überbrückungseinrichtung (1) nach Anspruch 2, ferner umfassend:
ein mit dem Steuermodul (11) verbundenes Aufzeichnungsmodul zum Aufzeichnen von Mediendaten.

5. Medienfluss-Überbrückungseinrichtung (1) nach Anspruch 2, ferner umfassend:
ein mit dem Steuermodul (11) und dem Audiomischmodul (14) verbundenes Aufzeichnungsmodul zum Aufzeichnen von Mediendaten.

6. System für Mediendienst, das die Medienfluss-Überbrückungseinrichtung (1) nach einem der Ansprüche 1 bis 5 enthält, umfassend:
eine Steuereinrichtung (2) zum Verarbeiten von Signalisierung und Steuern eines Dienstprozesses;
eine mit der Steuereinrichtung (2) verbundene Medienressourceneinrichtung (3) zum Bereitstellen von Medienressourcen; und
wobei die Medienfluss-Überbrückungseinrichtung (1) mit der Steuereinrichtung (2) und der Medienressourceneinrichtung (3) verbunden ist und die Medienressourceneinrichtung (3) einen Medienfluss über die Medienfluss-Überbrückungseinrichtung (1) zu oder von einer Einrichtung außerhalb des Mediendienstsystems übermittelt.

7. System nach Anspruch 6, wobei die Medienressourceneinrichtung (3) Folgendes umfasst:
eine Spracheinrichtung und/oder eine Faxeinrichtung und/oder eine Multimediaeinrichtung und/oder einen manuellen Agenten.

8. System nach Anspruch 6, wobei die Steuereinrichtung (2) Folgendes umfasst:
einen SCP eines intelligenten Netzwerks oder einen CTI-Server eines Call Centers oder eine Kombination davon oder einen MRFC eines IMS.

## Revendications

1. Dispositif de mise en parallèle de flux multimédias (1) comprenant :
un module de commande (11) destiné à recevoir un message de commande, à effectuer une négociation multimédia et à commander un processus de service, et
un module de protocole transparent en temps réel (RTP) (12), relié au module de commande (11) en vue de traiter des protocoles RTP et transférer un flux multimédia en fonction des informations de commande du module de commande (11), et
**caractérisé en ce que** :
le module de protocole RTP (12) comprend en outre :
un module source au protocole RTP (121) relié au module de commande (11), pour transférer un flux multimédia vers un terminal utilisateur, et
deux ou plusieurs modules de destination au protocole RTP (122, 123) reliés au module de commande (11) et au module source au protocole RTP (121), en vue de transférer un flux multimédia respectif à un dispositif de ressources multimédias (3) ou transférer un flux multimédia depuis le dispositif de ressources multimédias (3),
dans lequel le dispositif de ressources multimédias (3) fournit des ressources multimédias, dans lequel le dispositif de mise en parallèle comprend en outre un module de mixage audio (14) destiné à effectuer un mixage audio sur les flux multimédias de toutes les parties d'une conférence pendant un service à abonnés multiples,
dans lequel le module de commande (11) est relié au module de mixage audio (14), au module source au protocole RTP (121) et aux modules de destination au protocole RTP (122, 123) dans le but de commander chacun des modules.

2. Dispositif de mise en parallèle de flux multimédias (1) selon la revendication 1, comprenant en outre :
un module de conversion de code (13) destiné à convertir le format de code d'un flux multimédia, et/ou un module de mixage audio (14) destiné à effectuer un mixage audio sur les flux multimédias de toutes les parties d'une conférence pendant un service à abonnés multiples.

3. Dispositif de mise en parallèle de flux multimédias (1) selon la revendication 2, dans lequel le module de conversion de code (13) et/ou le module de mixage audio (14) sont, ou est, disposé(s) entre le module source au protocole RTP (121) et les modules de destination au protocole RTP (122) afin de relier le module source au protocole RTP (121) à au moins deux modules de destination au protocole RTP (122).

4. Dispositif de mise en parallèle de flux multimédias (1) selon la revendication 2, comprenant en outre :
un module d'enregistrement, relié au module de commande (11), pour enregistrer des données multimédias.

5. Dispositif de mise en parallèle de flux multimédias (1) selon la revendication 2, comprenant en outre :
un module d'enregistrement, relié au module de commande (11) et au module de mixage audio (14), pour enregistrer des données multimédias.

6. Système destiné à un service multimédia contenant le dispositif de mise en parallèle de flux multimédias (1) conforme à l'une quelconque des revendications 1 à 5, comprenant :
un dispositif de commande (2) destiné à traiter la signalisation et à commander un processus de service,
un dispositif de ressources multimédias (3), relié au dispositif de commande (2), afin de fournir des ressources multimédias, et
dans lequel le dispositif de mise en parallèle de flux multimédias (1) est relié au dispositif de commande (2) et au dispositif de ressources multimédias (3), et le dispositif de ressources multimédias (3) transfère un flux multimédia depuis ou vers un dispositif extérieur au système de services multimédias par l'intermédiaire du dispositif de mise en parallèle de flux multimédias (1).

7. Système selon la revendication 6, dans lequel le dispositif de ressources multimédias (3) comprend :
un dispositif vocal et/ou un dispositif de télécopie et/ou un dispositif multimédia et/ou un agent manuel.

8. Système selon la revendication 6, dans lequel le dispositif de commande (2) comprend :
le point SCP d'un réseau intelligent, ou le serveur d'intégration CTI d'un centre d'appel, ou bien une combinaison de ceux-ci, ou encore le contrôleur MRFC d'un système IMS.
